Europäisches Patentamt

European Patent Office

Office européen des brevets

(11) Veröffentlichungsnummer: **0 019 696**
**B1**

(12) **EUROPÄISCHE PATENTSCHRIFT**

(45) Veröffentlichungstag der Patentschrift:
**12.05.82**

(21) Anmeldenummer: **80101501.7**

(22) Anmeldetag: **21.03.80**

(51) Int. Cl.³: **G 03 B 21/11**

(54) **Mikrofiche-Speichereinrichtung.**

(30) Priorität: **30.03.79 DE 2912623**

(43) Veröffentlichungstag der Anmeldung:
**10.12.80 Patentblatt 80/25**

(45) Bekanntmachung des Hinweises auf die Patenterteilung:
**12.05.82 Patentblatt 82/19**

(84) Benannte Vertragsstaaten:
**BE FR GB IT NL**

(56) Entgegenhaltungen:
**keine**

(73) Patentinhaber: **AGFA-GEVAERT Aktiengesellschaft,
Camera-Werk Patent- und Lizenzwesen Postfach,
D-8000 München 90 (DE)**

(72) Erfinder: **Hofmann, Wilfried, Am Heimgarten 57,
D-8021 Taufkirchen (DE)**
Erfinder: **Lusch, Herbert, Rotdornweg 24,
D-8021 Taufkirchen (DE)**
Erfinder: **Rauffer, Walter, Kurt-Eisner-Strasse 41,
D-8000 München 83 (DE)**

Mikrofiche-Speichereinrichtung

Die Erfindung betrifft eine Mikrofiche-Speichereinrichtung. Es soll die Aufgabe gelöst werden, eine Speichereinrichtung für relativ wenige Mikrofiches zu schaffen, die einfach im Aufbau ist und einen raschen Zugriff zu dem gewünschten Mikrofiche erlaubt.

Erfindungsgemäß ist hierzu ein Gehäuse mit einer dem Benutzer zugewandten vorderen Öffnung zum Durchlaß der Mikrofiches vorgesehen, eine Anzahl von Mikroficheträgern zur Aufnahme jeweils eines Mikrofiches und eine Einrichtung zum Führen der Mikrofiches entlang einer Transportbahn innerhalb des Gehäuses an der Öffnung vorbei, wobei die Mikrofiches zumindest annähernd in Richtung zur Öffnung hin ausgerichtet sind und wobei die Transportbahn im Bereich der Öffnung eine Wendestelle aufweist, deren Abstand zur Öffnung so gewählt ist, daß ein an der Wendestelle befindliches Mikrofiche zumindest teilweise aus der Öffnung herausragt. Werden die Mikrofiches entlang der Transportbahn durch geeignete Transportmittel bewegt, so schiebt sich nacheinander Mikrofiche für Mikrofiche durch die Öffnung hindurch und kann vom Benutzer betrachtet und gegebenenfalls entnommen werden. Eine solche Speichereinrichtung ist optimal verwendbar für eine begrenzte Zahl von Mikrofiches von etwa 10 bis 50 Mikrofiches, eine Anzahl, die für eine selbsttätig arbeitende Retrieval-Einrichtung zu gering ist, bei der jedoch bereits zum erleichterten Aufsuchen und Finden des gewünschten Mikrofiches eine gewisse Auswahlhilfe vorgesehen sein sollte.

Vorteilhafterweise ist innerhalb des Gehäuses mindestens ein die Mikroficheträger tragendes Führungsband um zwei Umlenkelemente gespannt, von denen ein öffnungsnahes Umlenkelement einen kleineren Radius und ein öffnungsfernes Umlenkelement einen größeren Radius aufweist und antreibbar ist. Die Mikrofiches werden hierdurch nacheinander mehr oder weniger parallel durch die Öffnung hindurch zum Benutzer hin geschoben und anschließend wieder zurück ins Gehäuseinnere gezogen.

Weitere vorteilhafte Merkmale der Erfindung sind den übrigen Unteransprüchen im Zusammenhang mit der nachfolgenden Beschreibung zu entnehmen, in der ein Ausführungsbeispiel der Erfindung anhand der Zeichnung näher beschrieben ist. In der Zeichnung zeigt

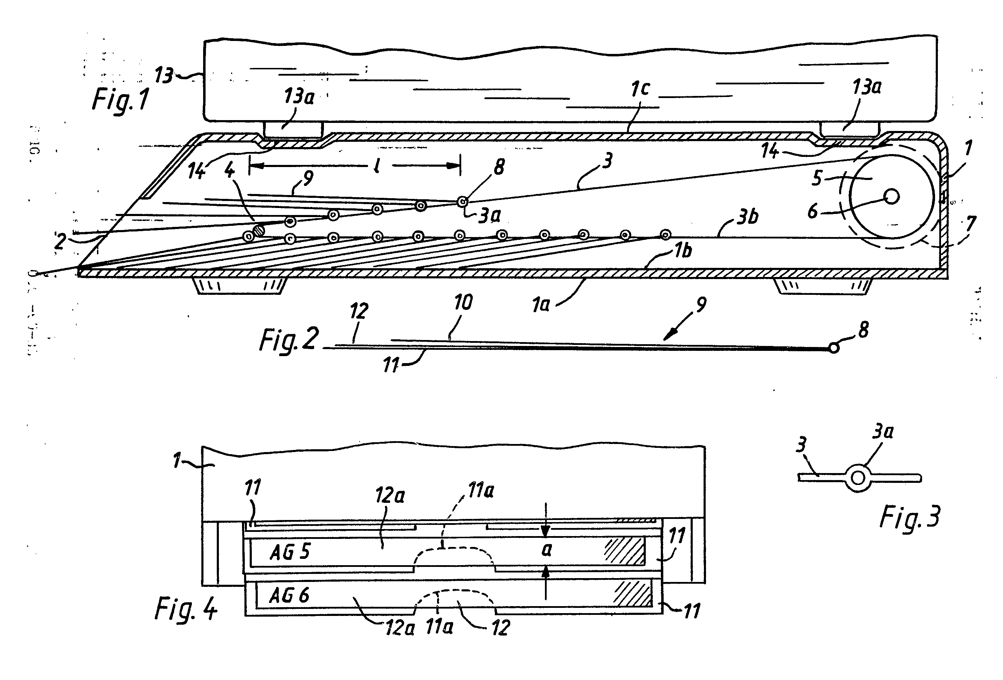

Figur 1 einen Schnitt durch die Mikrofiche-Speichereinrichtung,

Figur 2 eine Tasche, in die die Mikrofiches eingelegt werden,

Figur 3 ein Stück eines Transportbandes und

Figur 4 eine teilweise Aufsicht auf die Mikrofiche-Speichereinrichtung.

In einem flachen Gehäuse 1 ist an einer dem Benutzer zugewandten Frontseite eine Öffnung 2 vorgesehen. Innerhalb des Gerätegehäuses sind zwei parallel laufende Führungsbänder 3 über eine vordere Umlenkstange 4 und rückwärtige Antriebsräder 5 gespannt. Die Antriebsräder 5 sind auf einer am Gerät drehbar gelagerten Welle 6 befestigt. Diese Welle 6 ist über ein außerhalb des Gerätegehäuses 1 angeordnetes Handrad 7 antreibbar.

An den elastischen Führungsbändern 3 sind Lageraugen 3a ausgebildet, in denen die Steckachsen 8 der Mikrofiche-Träger 9 schwenkbar gelagert sind. Längs der Steckachse 8 sind an dieser die Hinterkanten von zwei aufeinanderliegenden, relativ steifen Folien 10, 11 angeformt, zwischen die jeweils ein Mikrofiche 12 eingelegt ist. Die Größe der unteren Folie 11 entspricht in etwa der Größe des Mikrofiches 12, während die obere Folie 10 etwas kürzer ist, so daß ein Streifen 12a der Breite a des Mikrofiches, welcher die ohne optische Hilfsmittel lesbare Kennzeichnung des jeweiligen Mikrofiches trägt, von der oberen Folie 10 unbedeckt bleibt. In der Vorderkante der unteren Folien 11 ist eine Griffmulde 11a ausgebildet, so daß zum Herausnehmen des Mikrofiches aus dem taschenförmigen Halter dieses mit zwei Fingern von beiden Seiten gefaßt werden kann.

Die Folien 10, 11 sind aus weißem Material, so daß sich die auf den Streifen 12a aufgebrachte Bezeichnung der einzelnen Mikrofichekarten deutlich lesbar abhebt. Es könnte jedoch die obere Folie 10 auch aus transparentem Material sein und den Streifen 12a überdecken, wobei zur leichteren Entnahme des Mikrofiches die obere Folie dann zweckmäßig ebenfalls eine Griffmulde aufweisen sollte. Der Abstand der Lageraugen auf dem Führungsband 3 ist geringfügig größer als die Breite a des Titelstreifens 12a. Der Abstand des parallel zur unteren Gehäuseplatte 1a verlaufenden unteren Bahnabschnittes 3b der Führungsbänder 3 zu der von der Gehäuseplatte 1a gebildeten Führungsfläche 1b ist wesentlich kleiner als die Länge l der Mikroficheträger 9. Die Mikroficheträger 9 liegen mit ihrem freien Ende auf der Führungsfläche 1b auf und sind im unteren Bereich 3b des Führungsbandes im spitzen Winkel zur Führungsfläche 1b geführt.

Zum Auswählen des gewünschten Mikrofiches betätigt der Benutzer das Handrad 7, wodurch er die Führungsbänder 3 antreibt. Hierdurch werden die Mikrofichehalter einer nach dem anderen aus der Öffnung 2 herausgeschoben und nach Umlenkung an der Stange 4 wieder ins Geräteinnere hineingezogen. Der Benutzer wählt das gewünschte Mikrofiche anhand der für ihn ohne optische Hilfsmittel lesbaren Beschriftung auf den Titelstreifen 12a aus. Das Einlegen der Mikrofiches erfolgt durch Anheben der oberen Folie 10 und Einschieben des Mikrofiches auf Anschlag.

Zur raumsparenden Unterbringung der Mikrofiche-Speichereinrichtung ist ihre Standfläche der Standfläche eines Mikrofilm-Lesegerätes (13) angepaßt und die Gehäuseoberseite 1c als Stellfläche für das Mikrofilm-Lesegerät ausgebildet. Zum Zwecke der Standsicherheit des Lesegerätes 13 können auf der Gehäuseoberseite 1c Standmulden 14 für die Stellfüße 13a des Lesegerätes vorgesehen sein.

## Patentansprüche

1. Mikrofiche-Speichereinrichtung, gekennzeichnet durch ein Gehäuse (1) mit einer dem Benutzer zugewandten vorderen Öffnung (2) zum Durchlassen der Mikrofiches (12), eine Anzahl von Mikrofichetträgern (9) innerhalb des Gehäuses zur Aufnahme jeweils eines Mikrofiches und eine Einrichtung (3 bis 5) zum Führen der Mikrofiches entlang einer Transportbahn innerhalb des Gehäuses an der Öffnung vorbei, wobei die Mikrofiches zumindest annähernd in Richtung zur Öffnung hin ausgerichtet sind und wobei die Transportbahn im Bereich der Öffnung eine Wendestelle (4) aufweist, deren Abstand zur Öffnung so gewählt ist, daß ein an der Wendestelle befindliches Mikrofiche zumindest teilweise aus der Öffnung herausragt.

2. Mikrofiche-Speichereinrichtung nach Anspruch 1, dadurch gekennzeichnet, daß innerhalb des Gehäuses mindestens ein die Mikrofichetträger (9) tragendes Führungsband um ein öffnungsnahes Umlenkelement (4) gespannt ist.

3. Mikrofiche-Speichereinrichtung nach Anspruch 2, dadurch gekennzeichnet, daß das Führungsband (3) um zwei Umlenkelemente (4, 5) gespannt ist, von denen das öffnungsnahe Umlenkelement (4) einen kleineren Radius aufweist als das öffnungsferne und eines der Umlenkelemente antreibbar ist.

4. Mikrofiche-Speichereinrichtung nach einem der vorhergehenden Ansprüche, dadurch gekennzeichnet, daß die Mikrofichetträger (9) von Taschen (10, 11) gebildet werden, die am Führungsband (3) verschwenkbar angelenkt sind.

5. Mikrofiche-Speichereinrichtung nach Anspruch 4, dadurch gekennzeichnet, daß zwei parallele Führungsbänder (3) vorgesehen sind, an denen Lageraugen (3a) ausgebildet sind, zwischen die eine an der rückwärtigen Kante der Taschen (10, 11) ausgebildete Achse (8) schwenkbar gelagert ist.

6. Mikrofiche-Speichereinrichtung nach einem der vorhergehenden Ansprüche, dadurch gekennzeichnet, daß die Führungsbahn (3) einen oberen und einen unteren Bahnabschnitt aufweist, daß unterhalb des unteren Bahnabschnittes (3b) eine Leitfläche (1b) vorgesehen ist, auf der die vorderen, freien Enden der Mikrofiches bzw. Mikrofichetträger (9) aufliegen, und daß der Abstand der unteren Führungsbahn zur Leitfläche wesentlich kleiner ist als die Längsabmessung der Mikrofiches bzw. Mikrofichetträger.

7. Mikrofiche-Speichereinrichtung nach einem der vorhergehenden Ansprüche, dadurch gekennzeichnet, daß die gespeicherten Mikrofiches (12) entlang ihrer Vorderkante einen Titelstreifen (12a) aufweisen, daß der Abstand der Mikrofichetträger (9) entlang der Transportbahn (3) mindestens gleich der Breite (a) dieser Titelstreifen ist, und daß der Abstand der Wendestelle (4) von der Öffnung (2) höchstens so groß ist, daß ein an der Wendestelle befindliches Mikrofiche mindestens um die Breite des Titelstreifens aus der Öffnung herausschaut.

8. Mikrofiche-Speichereinrichtung nach einem der Ansprüche 4 bis 6, dadurch gekennzeichnet, daß die Taschen von zwei übereinanderliegenden Folien (10, 11) gebildet werden.

9. Mikrofiche-Speichereinrichtung nach Anspruch 7 und 8, dadurch gekennzeichnet, daß die obere Folie (10) in etwa um die Breite (a) des Titelstreifens (12a) kürzer ist als die untere Folie (11).

10. Mikrofiche-Speichereinrichtung nach Anspruch 8 oder 9, dadurch gekennzeichnet, daß die untere Folie (11) an ihrer Vorderkante eine Griffmulde (11a) aufweist.

11. Mikrofiche-Speichereinrichtung nach einem der Ansprüche 8 bis 10, dadurch gekennzeichnet, daß die untere Folie zumindest im Bereich des Titelstreifens (12a) undurchsichtig, insbesondere weiß, ist.

12. Mikrofiche-Speichereinrichtung nach einem der Ansprüche 8 oder 10, dadurch gekennzeichnet, daß die obere Folie (10) zumindest im Bereich des Titelstreifens (12a) transparent ist.

13. Mikrofiche-Speichereinrichtung nach einem der vorhergehenden Ansprüche, dadurch gekennzeichnet, daß das Gehäuse (1) als Unterbau eines Mikrofilm-Lesegerätes (13) ausgebildet ist.

## Claims

1. A microfiche-storage device characterised in that it comprises a housing (1) having a frontal opening (2) facing the user and permitting the passage therethrough of the microfiches (12), a plurality of microfiche-carriers (9) within the housing each adapted to receive one microfiche, and a device (3 to 5) for guiding the microfiches along a transportation track within the housing past said opening the microfiches being lined up at least approximately in the direction towards the opening and the transportation track comprising a turning station (4) in the region of the opening and spaced relative to the latter in such a way that a microfiche which is positioned at this turning station extends at least partially out of said opening.

2. A microfiche-storage device according to claim 1, characterised in that within the housing at least one guidetape carrying the microfiche-carriers (9) is tensioned around a reversing element (4) arranged in the proximity of the opening.

3. A microfiche-storage device according to claim 2, characterised in that the guide-tape (3) is stretched around two reversing elements (4, 5) of which the element (4) which is near the opening has a smaller radius than the reversing element which is remote from the opening and one of said reversing elements is adapted to be driven.

4. A microfiche-storage device according to any preceding claim, characterised in that the microfiche-carriers (9) are in the form of pockets (10, 11) which are pivotally hinged to the guide tape (3).

5. A microfiche-storage device according to claim 4, characterised by the provision of two parallel guide tapes (3) on which bearing eyes (3a) are formed between which a hinge element (8) formed along the rear edge of the pockets (10, 11) is pivotally mounted.

6. A microfiche-storage device according to any preceding claim, characterised in that the guide-track (3) comprises an upper and a lower run, that below the lower track run (3b) there is provided a guide face (1b) on which rest the free forward ends of the microfiches or of the microfiche-carriers (9) and that the distance between the lower guide track run and said guide face is substantially shorter than the length of the microfiche or microfiche-carrier.

7. A microfiche-storage device according to any preceding claim, characterised in that the stored microfiches (12) are provided with a title-strip (12a) along their leading edge, that the spacing distance of the microfiche-carriers (9) along the transportation track (3) is at least equal to the width (a) of this title-strip and that the distance between the turning station (4) and the opening (2) is at most of such length that a microfiche which is situated at the turning station protrudes from the opening by at least the width of said title-strip.

8. A microfiche-storage device according to any claim 4 to 6, characterised in that the pockets are formed by two relatively superposed foils (10, 11).

9. A microfiche-storage device according to claims 7 and 8, characterised in that the top foil (10) is shorter than the bottom foil (11) by an amount corresponding approximately to the width (a) of the title-strip (12a).

10. A microfiche-storage device according to claim 8 or 9, characterised in that the frontal edge of the bottom foil (11) is provided with a handling recess (11a).

11. A microfiche-storage device according to any claim 8 to 10, characterised in that the bottom foil is opaque, in particular white, at least in the region of the title-strip (12a).

12. A microfiche-storage device according to any of claims 8 or 10, characterised in that the top foil (10) is transparent, at least in the region of the title-strip (12a).

13. A microfiche-storage device according to any preceding claim, characterised in that the housing (1) is constructed as a base unit for a microfilm-reader apparatus (13).

## Revendications

1. Dispositif pour emmagasiner des microfiches, caractérisé par un boîtier (1) ayant une ouverture (2) antérieure, qui est tournée vers l'utilisateur et qui est destinée à laisser passer les microfiches (12), un certain nombre de supports (9) de microfiches à l'intérieur du boîtier destinés à recevoir chacun une microfiche et un dispositif (3 à 5) destiné à guider les microfiches à l'intérieur du boîtier le long d'un trajet de transport passant devant l'ouverture, les microfiches étant orientées au moins approximativement dans la direction de l'ouverture et le trajet de transport présentant dans la région de l'ouverture un tournant (4), dont la distance à l'ouverture est choisie de manière à ce qu'une microfiche se trouvant au tournant sorte au moins partiellement par l'ouverture.

2. Dispositif pour emmagasiner des microfiches suivant la revendication 1, caractérisé en ce que, à l'intérieur du boîtier, au moins une bande de guidage portant les supports (9) de microfiches est tendue autour d'un élément (4) de renvoi proche de l'ouverture.

3. Dispositif pour emmagasiner des microfiches suivant la revendication 2, caractérisé en ce que la bande (3) de guidage est tendue entre deux éléments (4, 5) de renvoi, dont celui (4) proche de l'ouverture présente un rayon plus petit que celui qui est éloigné de l'ouverture et l'un des éléments de renvoi peut être entraîné.

4. Dispositif pour emmagasiner des microfiches suivant l'une des revendications précédentes, caractérisé en ce que les supports (9) de microfiches sont formés par des pochettes (10, 11) qui sont articulées de manière à pouvoir pivoter sur la bande (3) de guidage.

5. Dispositif pour emmagasiner des microfiches suivant la revendication 4, caractérisé en ce qu'il est prévu deux bandes (3) parallèles de guidage, sur lesquelles sont formés des oeillets (3a) formant palier entre lesquels est monté pivotant un axe (8) formé sur le bord postérieur des pochettes (10, 11).

6. Dispositif pour emmagasiner des microfiches suivant l'une des revendications précédentes, caractérisé en ce que la voie (3) de guidage présente un tronçon supérieur et un tronçon inférieur, en ce que en dessous du tronçon (3b) inférieur est prévue une surface (1b) de guidage sur laquelle reposent les extrémités libres antérieures des microfiches ou des supports (9) de microfiches et en ce que la distance entre la voie inférieure de guidage et la surface de guidage est nettement plus petite que la dimension longitudinale des microfiches ou des supports de microfiches.

7. Dispositif pour emmagasiner des microfiches suivant l'une des revendications précédentes, caractérisé en ce que les microfiches (12) emmagasinées présentent le long de leur bord antérieur une bande (12a) de titre, en ce que la distance entre les supports (9) de microfiches le long de la voie (3) de transport est au moins égale à la largeur (a) de cette bande de titre et en ce que la distance entre le tournant (4) et l'ouverture (2) est au plus telle qu'une microfiche se trouvant au tournant sorte par l'ouverture sur au moins la largeur de la bande de titre.

8. Dispositif pour emmagasiner des microfiches suivant l'une des revendications 4 à 6, caractérisé en ce que les pochettes sont formées de deux feuilles (10, 11) superposées.

9. Dispositif pour emmagasiner des microfiches suivant la revendication 7 ou 8, caractérisé en ce que la feuille (10) supérieure est plus courte que la feuille (11) inférieure d'environ la largeur (a) de la bande (12a) de titre.

10. Dispositif pour emmagasiner des microfiches suivant la revendication 8 ou 9, caractérisé en ce que la feuille (11) inférieure présente une encoche (11a) de préhension sur son bord antérieur.

11. Dispositif pour emmagasiner des microfiches suivant l'une des revendications 8 à 10, caractérisé en ce que la feuille inférieure est opaque, notamment blanche, au moins dans la région de la bande (12a) de titre.

12. Dispositif pour emmagasiner des microfiches suivant la revendication 8 ou 10, caractérisé en ce que la feuille (10) supérieure est transparente au moins dans la région de la bande (12a) de titre.

13. Dispositif pour emmagasiner des microfiches suivant l'une des revendications précédentes, caractérisé en ce que le boîtier (1) est agencé en infrastructure d'un appareil de lecture de microfilm.

Fig.1

Fig.2

Fig.3

Fig.4

0 019 696